Europäisches Patentamt

(19) European Patent Office

Office européen des brevets

(11) Numéro de publication: **0 128 084**
**B1**

(12) **FASCICULE DE BREVET EUROPEEN**

(45) Date de publication du fascicule du brevet:
**01.04.87**

(51) Int. Cl.⁴: **H 02 H 3/07**

(21) Numéro de dépôt: **84401071.0**

(22) Date de dépôt: **23.05.84**

(54) Déclencheur électronique sélectif associé à un disjoncteur limiteur.

(30) Priorité: **03.06.83 FR 8309383**

(43) Date de publication de la demande:
**12.12.84 Bulletin 84/50**

(45) Mention de la délivrance du brevet:
**01.04.87 Bulletin 87/14**

(84) Etats contractants désignés:
**AT BE CH DE GB IT LI NL SE**

(56) Documents cités:
**DE - A - 1 563 836**
**DE - A - 2 425 153**
**FR - A - 1 452 969**
**FR - A - 1 452 970**
**FR - A - 2 160 459**
**FR - A - 2 255 730**
**FR - A - 2 379 184**

(73) Titulaire: **MERLIN GERIN, Rue Henri Tarze,**
**F-38050 Grenoble Cédex (FR)**

(72) Inventeur: **Fraisse, Didier, Merlin Gerin,**
**F-38050 Grenoble Cedex (FR)**
Inventeur: **Puccinelli, Robert, Merlin Gerin,**
**F-38050 Grenoble Cedex (FR)**

(74) Mandataire: **Kern, Paul et al, Merlin Gerin Sce.**
**Brevets 20, rue Henri Tarze, F-38050 Grenoble Cedex**
**(FR)**

ACTORUM AG

## Description

L'invention est relative à un déclencheur sélectif conforme au préambule de la revendication 1.

Un tel déclencheur sélectif à comptage d'impulsions pour un réseau à disjoncteurs limiteurs est décrit dans le document FR-A-2379184. L'actionneur comporte une bobine de déclenchement dont l'excitation est commandée par un transistor de puissance. La base du transistor est reliée à la sortie d'un compteur binaire recevant des impulsions calibrées d'entrée élaborées par une chaîne de mise en forme des dépassements de courant au dessus du seuil de déclenchement. Ce dernier est inférieur au seuil de répulsion électrodynamique des contacts du disjoncteur. La chaîne de mise en forme peut s'adapter à deux régimes de fonctionnement selon l'intensité du courant de défaut:

– un premier régime de fonctionnement sinusoïdal sans répulsion électrodynamique lorsque le courant de surcharge est compris entre le seuil de déclenchement, et le seuil de répulsion,

– un deuxième régime de fonctionnement impulsionnel avec répulsion électrodynamique quand le courant de court-circuit est supérieur au seuil de répulsion.

En régime sinusoïdal, quand un déclencheur atteint son seuil de déclenchement pour la première fois, il enregistre une impulsion et démarre une temporisation pendant laquelle tout autre signal ne sera pas pris en compte. Après écoulement de la temporisation, le dépassement de seuil est à nouveau compté et une nouvelle temporisation est démarrée. Le processus se répète jusqu'au n ième signal qui provoque le déclenchement.

En régime impulsionnel, la temporisation est neutralisée après détection d'un intervalle à courant nul ou inférieur à un seuil très bas de manière à débloquer l'inhibition de comptage. L'impulsion suivante sera donc prise en compte après cette neutralisation, et entrainera la répétition du processus.

On remarque que tout ordre de déclenchement est émis par le compteur indépendamment du régime en fonctionnement. La chaine électronique de mise en forme est de ce fait compliquée et d'un coût élevé.

Le brevet belge BE-A-830405 de la demanderesse décrit un déclencheur pour un disjoncteur limiteur, dans lequel le nombre de battements ou cycles ouverture fermeture des contacts sur défaut est compté et intégré soit par un compteur mécanique, notamment à crémaillère à déplacement cran par cran, soit par un compteur électronique digital ou analogique. Le disjoncteur limiteur est néanmoins équipé d'un déclencheur usuel du type thermique ou magnétothermique. L'association d'un tel déclencheur intrinsèque avec un compteur électronique du nombre de cycles successifs pose des problèmes d'encombrement car le compteur électronique nécessite des organes de commande spécifiques, à savoir un transformateur de courant à deux enroulements secondaires, un bloc d'alimentation, etc. Un autre problème technique est lié au fonctionnement du compteur électronique qui enregistre une impulsion ou courant de défaut chaque fois que le courant de la ligne franchit un seuil donné, dont la valeur est inférieure au courant provoquant l'ouverture rapide des contacts. On a remarqué que l'intensité du courant crête du signal de mesure délivré par le transformateur d'intensité associé à la ligne à protéger n'est pas l'image exacte de la valeur effective du courant de court-circuit présumé. L'identification des impulsions de courant de défaut correspondant aux cycles ouverture fermeture des contacts du disjoncteur limiteur est imparfaite avec un tel dispositif, et il peut en résulter un déclenchement défectueux ou intempestif.

La présente invention a pour but d'éviter ces inconvénients et de permettre la réalisation d'un déclencheur électronique sélectif ayant un encombrement réduit et une bonne fiabilité de la protection sur court-circuit quel que soit la forme et le régime du courant de défaut.

Le système électronique du déclencheur sélectif selon l'invention comprend de plus un premier circuit électronique de déclenchement temporisé, notamment à long retard et/ou à court retard, et un deuxième circuit électronique de déclenchement rapide à temps d'intervention inférieur à celui du premier circuit, le compteur étant inséré dans ledit deuxième circuit comprenant de plus: un déclencheur instantané ayant un seuil de déclenchement instantané supérieur au(x) seuil(s) de déclenchement du premier circuit électronique, et un organe de commutation susceptible d'occuper soit une première position correspondant à la mise hors circuit du compteur de telle sorte que l'actionneur peut recevoir un ordre de déclenchement directement à partir du déclencheur instantané et soit une deuxième position correspondant à l'insertion du compteur dans le deuxième circuit, de telle sorte que l'actionneur peut recevoir l'ordre de déclenchement à partir du compteur après comptage du nombre réglé de cycles d'ouverture-fermeture.

On remarque que le compteur reçoit les signaux de mesure des capteurs de courants communs aux deux circuits de déclenchement temporisé et rapide. Le circuit de déclenchement temporisé à long retard et à court retard intervient pour tout courant de surcharge ou de court-circuit inférieur au seuil de déclenchement instantané. La position de l'organe de commutation permet de choisir le mode de fonctionnement du circuit de déclenchement rapide lors de l'apparition d'un court-circuit important à savoir le déclenchement instantané ou le déclenchement par comptage du nombre de cycles.

L'organe de commutation est avantageusement constitué par un interrupteur à deux positions stables connecté électriquement en parallèle aux bornes du compteur, lequel est relié en série avec le déclencheur instantané dans le deuxième circuit électronique de déclenchement.

Le déclencheur instantané du deuxième circuit électronique de déclenchement comprend un diviseur résistif dont le point milieu est connecté à l'entrée du compteur.

Les moyens de réglage du compteur et l'organe de commutation du compteur sont agencés dans un commutateur ayant une série de crans multiples de présélection du nombre de cycles, et un cran additionnel de mise hors circuit du compteur autorisant le déclenchement instantané.

Lorsque les capteurs de courant sont formés par des transformateurs d'intensité, la discrimination des impulsions de courant de défaut correspondant aux cycles d'ouverture fermeture de contacts s'opère au moyen d'un circuit détecteur à temporisation servant à inhiber le fonctionnement du compteur à partir de l'instant de détection de la première onde de défaut, la temporisation étant variable selon la forme du signal de mesure délivré par le transformateur d'intensité au circuit détecteur.

Un circuit de mesure en di/dt contrôle le temps de montée du premier front dudit signal de mesure, et coopère avec le circuit détecteur pour assurer une variation de la temporisation selon une fonction inverse avec le di/dt.

Dans le cas où les capteurs de courant sont constitués par des tores amagnétiques du type Rogowski, le compteur comporte un circuit détecteur à seuil qui initialise le comptage des impulsions de courant de défaut après dépassement dudit seuil par le signal de mesure du capteur.

Le compteur électronique peut être analogique ou numérique.

D'autres avantages et caractéristiques ressortiront plus clairement de la description qui va suivre de différents modes de réalisation de l'invention, donnés à titre d'exemples non limitatifs et représentés aux dessins annexés dans lesquels:

La fig. 1 représente un schéma synoptique d'un déclencheur électronique sélectif selon l'invention, associé à un disjoncteur limiteur de protection d'une installation triphasée;

la fig. 2 est une variante de la fig. 1;

la fig. 3 montre en circuit synoptique d'un compteur électronique analogique incorporé dans le déclencheur;

les fig. 4 et 5 représentent les diagrammes du courant limité (en traits pleins) pour deux valeurs différentes du courant présumé de court-circuit (en traits pointillés);

la fig. 6 est une vue partielle du compteur de la fig. 3, selon une variante de réalisation de l'invention;

la fig. 7 illustre le schéma détaillé du déclencheur électronique sélectif selon l'invention associé à un disjoncteur tétrapolaire;

la fig. 8 montre le schéma monophasé d'une installation de distribution à deux étages, dotée d'une sélectivité des protections sur courts-circuits;

les fig. 9 et 10 représentent les chronogrammes des signaux en différents points du compteur selon la fig. 3, respectivement lors du non déclenchement et du déclenchement du déclencheur, le compteur étant réglé à deux cycles d'ouverture fermeture.

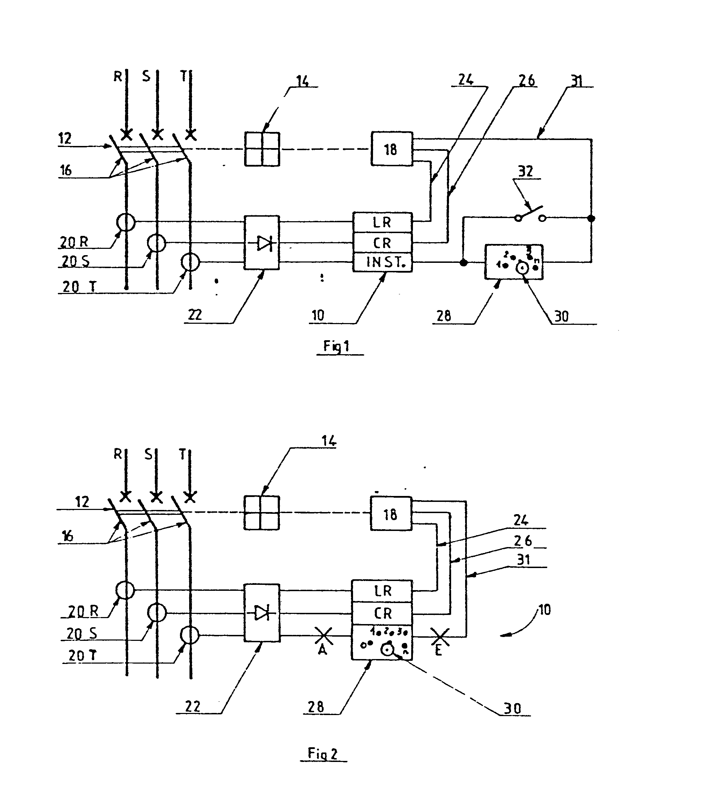

La fig. 1 représente le schéma synoptique d'un déclencheur sélectif 10 électronique associé à un disjoncteur limiteur 12 de protection des conducteurs de ligne R, S, T d'un réseau alternatif triphasé. Le disjoncteur limiteur 12 comporte un mécanisme 14 de déclenchement piloté par le déclencheur sélectif 10, et des moyens d'ouverture rapide et de fermeture des contacts 16 lorsque la valeur du courant de défaut se trouve respectivement au-dessus et au-dessous d'un seuil prédéterminé. A la suite d'un court-circuit, l'ouverture rapide des contacts 16 s'opère de manière spontanée, indépendamment de la commande de déclenchement du disjoncteur, de manière à insérer un arc dès l'apparition de défaut, entraînant une limitation notable du courant. Après coupure du courant, les contacts 16 du disjoncteur limiteur 12 se referment automatiquement si un ordre de déclenchement n'a pas été délivré par le déclencheur sélectif 10.

La structure du disjoncteur limiteur 12 peut être quelconque, l'intervention des moyens d'ouverture rapide des contacts 16 s'effectuant d'une manière bien connu par effet électrodynamique ou électromagnétique. Le disjoncteur limiteur, peut être soit un appareil monobloc intégrant la fonction limiteur de courant, soit un appareil modulaire formé par l'association en série d'un disjoncteur de base et d'un bloc limiteur.

L'ordre de déclenchement émis par le déclencheur sélectif 10 provoque l'excitation du relais d'un actionneur 18 coopérant avec un verrou du mécanisme 14 de déclenchement. Le déclenchement du mécanisme 14 par déverrouillage du verrou confirme l'ouverture du disjoncteur. Le déclencheur sélectif 10 électronique est à propre courant, c'est-à-dire sans source auxiliaire, et comporte un premier circuit de déclenchement temporisé à long retard LR pour la protection contre es courants de surcharge et à court retard CR pour la protection contre les courants de courts-circuits, et un deuxième circuit de déclenchement rapide comprenant un déclencheur instantané INST. L'intensité du courant circulant dans chaque conducteur de ligne R, S, T du réseau est contrôlée par des capteurs de courant 20 R, 20 S, 20 T intégrés dans un boîtier du disjoncteur limiteur 12 et agencés à l'aval des contacts 16. Les capteurs 20 R, 20 S, 20 T sont connectés à un bloc redresseur 22 destiné à fournir simultanément l'alimentation et le signal de mesure aux circuits de déclenchement LR, CR et INST. Les sorties du premier circuit de déclenchement temporisé LR et CR sont branchées directement à l'actionneur 18 par deux conducteurs de liaison 24, 26. Le deuxième circuit de déclenchement rapide est connecté à un compteur 28 électronique intermédiaire relié à l'actionneur 18 par un conducteur de liaison 31.

Le compteur 28 comporte un dispositif électronique de traitement et de comptage des impulsions de courant de défaut correspondant aux cycles successifs d'ouverture et de fermeture rapides des contacts 16 du disjoncteur limiteur 12. Le compteur 28 est équipé d'un commutateur 30 de réglage du nombre de pas pour sélectionner le nombre d'impulsions de courant de défaut. Le commutateur 30 comprend une pluralité de plots ou crans 1, 2, 3... n de présélection du nombre de pas, et le compteur 28 transmet l'ordre de déclenchement à l'actionneur 18 lorsque le nombre d'impulsions correspondant aux cycles successifs d'ouverture et fermeture des contacts 16 est égal au nombre de pas affiché par le commutateur 30.

La fonction sélectivité peut être supprimée par la fermeture d'un interrupteur 32 de shuntage du compteur 28. Le circuit de déclenchement instantané INST commande alors directement l'actionneur 18 dès que le courant dépasse le seuil de déclenchement instantané.

La fig. 2 est une variante de la fig. 1, le déclencheur instantané INST étant intégré dans le dispositif électronique du compteur 28 inséré entre le bloc redresseur 22 et l'actionneur 18. Lorsque le commutateur 30 de réglage se trouve sur le plot 1, le compteur 28 délivre un ordre de déclenchement dès la première impulsion de courant de défaut correspondant à un cycle unique d'ouverture fermeture des contacts 16. Le commutateur 30 comprend de plus en plot 0 remplissant la fonction de l'interrupteur 32 de la fig. 1, qui assure le déclenchement instantané.

Le fonctionnement du déclencheur électronique 10 selon les fig. 1 et 2 est le suivant:

## Protection contre les surcharges

En présence d'un courant de surcharge dont l'intensité est inférieure au seuil de déclenchement à court retard, les contacts 16 du disjoncteur 12 restent fermés jusqu'à l'intervention du premier circuit de déclenchement temporisé LR à long retard. L'actionneur 18 reçoit l'ordre de déclenchement du conducteur 24 associé au circuit LR, et le mécanisme 14 ouvre les contacts 16 après déverrouillage de verrou par l'actionneur 18. Les autres circuits de déclenchement CR et INST, ainsi que le compteur 28 restent inactifs.

## Protection contre les courts-circuits

Le circuit de déclenchement temporisé CR à court retard est sensible aux courants de courts-circuits dont l'intensité est comprise entre le seuil de déclenchement à long retard et le seuil de déclenchement instantané. Ce dernier est légèrement inférieur au courant maximum de tenue électrodynamique du disjoncteur limiteur 12, et les contacts 16 ne s'ouvrent qu'après déverrouillage du mécanisme 14 polité par l'actionneur 18 lors de l'émission de l'ordre de déclenchement par le circuit CR. Le compteur 28 reste inactif durant cette phase de déclenchement.

La fonction limitation intervient pour les courants de courts-circuits élevés traversant le disjoncteur 12. Il en résulte une ouverture rapide des contacts 16 avec insertion d'arcs provoquant un effet de limitation du courant. La diminution de l'intensité ou la disparition du courant limité provoque ensuite la refermeture des contacts 16 en cas d'absence d'ordre de déclenchement transmis à l'actionneur 18. Le compteur 28 compte directement le nombre de cycles successifs d'ouverture et de fermeture des contacts 16, et délivre l'ordre de déclenchement à l'actionneur 18 lorsque le nombre de cycles est égal au nombre de pas affiché par le commutateur 30, l'interrupteur 32 (fig. 1) étant en position d'ouverture. Sur le cran 1, le compteur 28 transmet l'ordre de déclenchement dès le premier battement des contacts 16. Sur le cran 2, l'ordre de déclenchement du mécanisme 14 intervient au deuxième battement, et ainsi de suite jusqu'au cran n.

La fermeture de l'interrupteur 32 (fig. 1) de shuntage du compteur 28, ou l'ajustage du commutateur 30 sur le cran 0 (fig. 2) engendrent le déclenchement instantané du mécanisme 14 dès que l'intensité du courant de court-circuit dépasse le seuil de déclenchement instantané, l'ordre étant transmis à l'actionneur 18 par le conducteur 31. Lorsque l'interrupteur 32 est ouvert, le réglage du commutateur 30 sur le cran 1 provoque le déclenchement au premier battement des contacts.

A la suite d'un déclenchement instantané ou d'un déclenchement par comptage des ondes de courant de défaut, le temps de déclenchement du disjoncteur 12 est nettement inférieur à celui intervenant au moyen du circuit temporisé CR à court retard. Le temps de déclenchement au premier battement des contacts (cran 1 du commutateur 30) est légèrement supérieur au temps de déclenchement instantané.

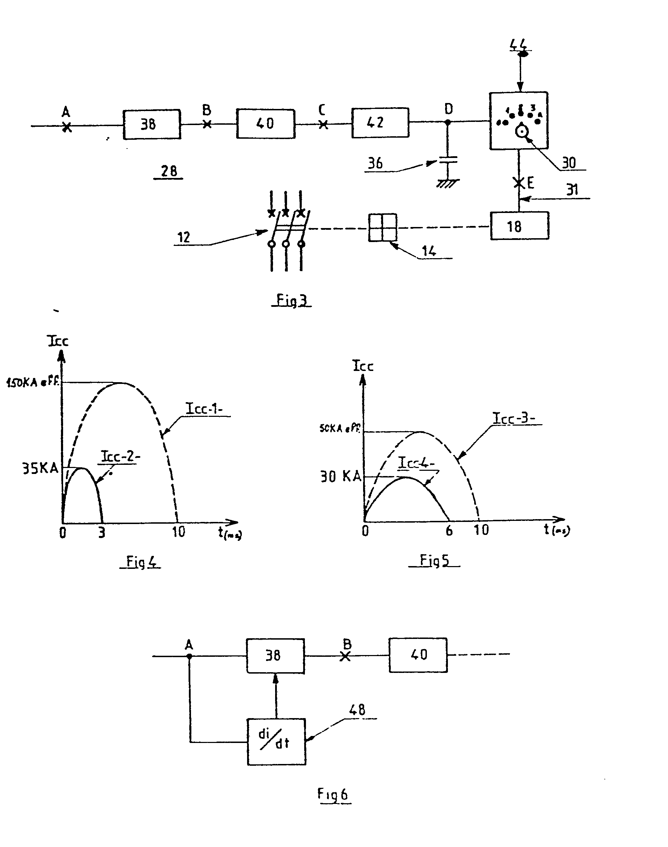

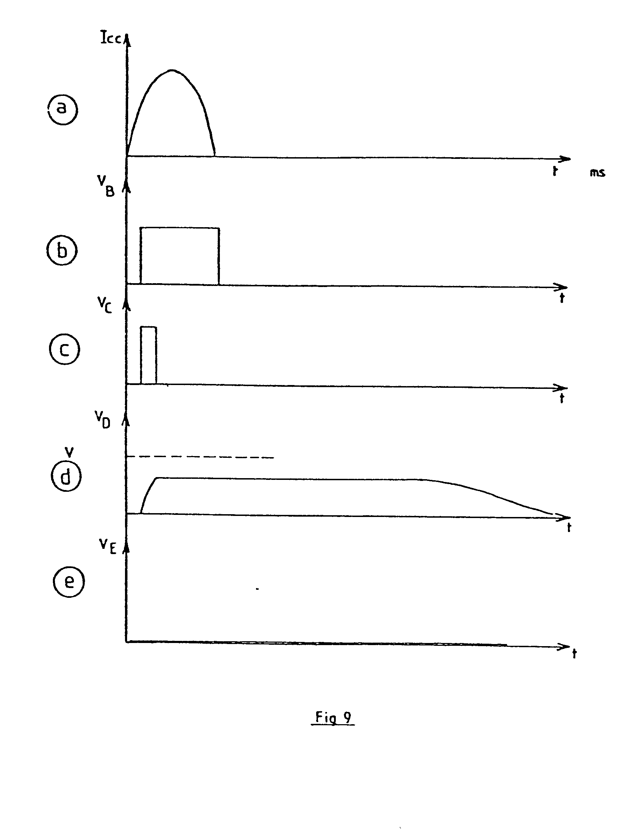

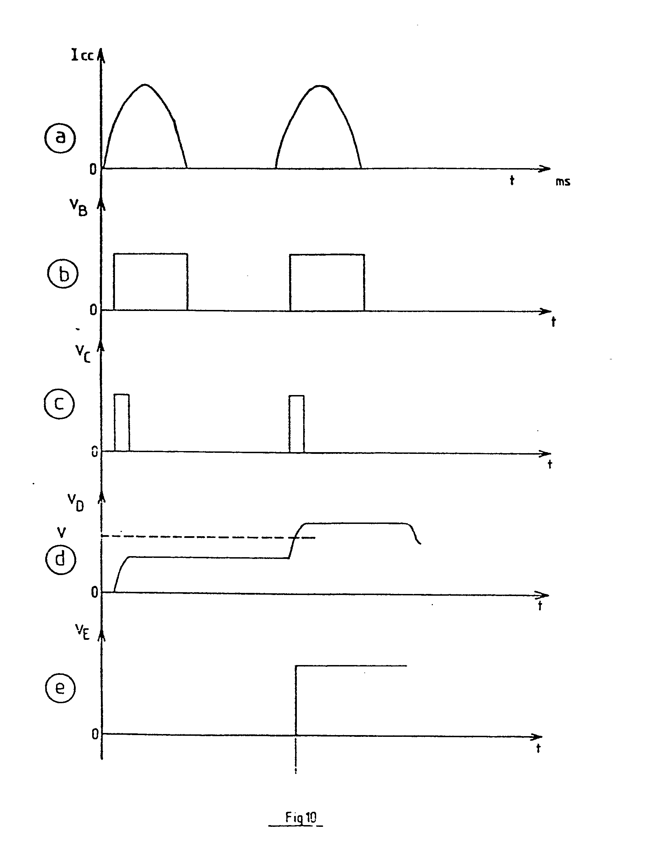

Le circuit électronique du compteur 28 de cycles peut être de type numérique ou analogique, et il est totalement intégré dans le déclencheur électronique 10 du disjoncteur 12. La fig. 3 montre un exemple de réalisation d'un compteur analogique 28 inséré entre les points A et E de la fig. 2. L'intégration des impulsions de courant de défaut correspondant aux cycles successifs ouverture fermeture des contacts 16 s'effectue par la charge graduelle d'un condensateur 36. L'allure des signaux aux différents points A, B, C, D, E est illustrée sur les fig. 9 et 10. Le signal de défaut (voir fig. 9.a) en provenance du bloc redresseur 22 est traité dans un circuit détecteur 38 destiné à délivrer au point B une impulsion (fig. 9.b) calibrée en amplitude. Cette impulsion est ensuite calibrée en temps par un circuit de calibrage 40 constitué par un différentiateur suivi d'une mesure de seuil. L'impulsion calibrée en amplitude et en temps (voir fig. 9.c) est envoyée dans un circuit intégrateur 42 pour effectuer la charge du condensateur 36 branché entre le point D et la masse. La tension (voir fig. 9.d) aux bornes du condensateur 36 est ensuite appliquée à l'une des entrées d'un comparateur 44 dont l'autre entrée sert à afficher le seuil de déclenchement au moyen du commutateur 30 de réglage. La tension de sortie (voir fig. 9.e) du comparateur 44 sert à piloter l'actionneur 18.

La détection des impulsions de courant de défaut devant être comptées par le compteur 28 (fig. 3) pose des problèmes de choix du circuit détecteur 38 en fonction de la nature des capteurs de courant 20 R, 20 S, 20 T. Les fig. 4 et 5 illustrent les diagrammes du courant limité (en traits pleins) pour deux valeurs différentes du courant présumé de court-circuit (en pointillé). Par exemple, un courant présumé $I_{CC1}$ de 150 kA (fig. 4) donne un courant limite $I_{CC2}$ de 35 kA ayant une durée de 3 ms correspondant au temps total de coupure. Dans un autre exemple, sur la fig. 5, un courant de court-circuit présumé $I_{CC3}$ de 50 kA engendre un courant limité $I_{CC4}$ de 30 kA pendant une durée de 6 ms. Le signal de mesure délivré par les transformateurs d'intensité au déclencheur électronique 10 est sensiblement identique en crête pour les deux valeurs du courant limité $I_{CC2}$ et $I_{CC4}$. Il en résulte que la crête du signal de mesure des transformateurs ne correspond pas à la valeur effective du courant de court-circuit présumé.

Or, le principe du système nécessite l'introduction d'une temporisation supérieure à la durée de la coupure, c'est-à-dire la durée de l'onde de défaut correspondant au courant limité $I_{CC2}$ ou $I_{CC4}$, et inférieure au temps de retombée des contacts 16. Il faut donc que la temporisation soit une fonction du courant de court-circuit présumé et serve à inhiber le fonctionnement du compteur 28 à partir de l'instant de détection de la première onde de défaut. Sur la fig. 6, un circuit de mesure 48 en di/dt contrôle le temps de montée du premier front du signal délivré par les transformateurs d'intensité, et coopère avec le circuit détecteur 38 pour assurer une variation de la temporisation selon une fonction inverse avec le di/dt. En effet, le di/dt délivré par les transformateurs d'intensité constitue un paramètre significatif du courant présumé.

Lorsque les capteurs de courants 20 R, 20 S, 20 T sont constitués par des tores amagnétiques du type Rogowski délivrant directement un signal de mesure en di/dt, le circuit détecteur 38 de la fig. 3 peut être un simple circuit à seuil. Le compteur 28 commencera alors le comptage après dépassement du seuil par le courant.

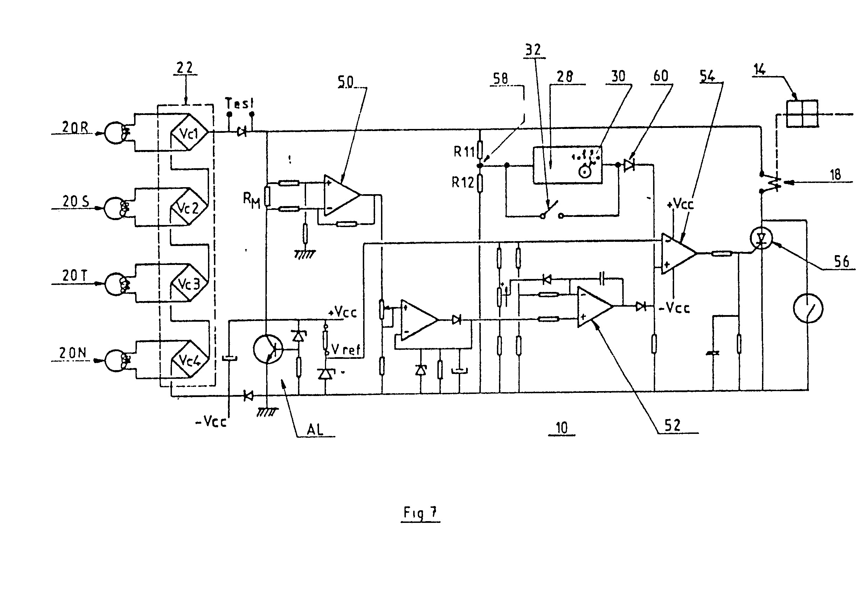

La fig. 7 représente le schéma détaillé d'un déclencheur électronique analogique 10 sélectif, équipé d'un compteur 28 d'onde de courant le défaut. Le circuit électronique du déclencheur analogique 10 est similaire à celui du dispositif faisant l'objet de la demande de brevet français N° 8212329 déposée le 12.07.1982 par la demanderesse publiée le 13.01.1984 sous le N° FR-A-2530089. Le déclencheur 10 est associé à un disjoncteur limiteur tétrapolaire comprenant des capteurs de courant 20 R, 20 S, 20 T, 20 N dont les enroulements de mesure sont connectés respectivement à des points de diodes $VC_1$, $VC_2$, $VC_3$, $VC_4$ du bloc redresseur 22. Il est inutile de décrire en détail le circuit du déclenchement analogique, et on rappellera brièvement qu'il comporte:

– une résistance de mesure $R_M$,

– un circuit d'alimentation AL raccordé au bloc redresseur 22,

– un circuit de mise en forme 50 connecté aux bornes de la résistance de mesure $R_M$,

– un déclencheur temporisé 52 doté d'un opérateur analogique à deux tensions de seuil pour constituer les premier et deuxième circuits de déclenchement LR et CR,

– un détecteur de niveau 54 formé par un amplificateur différentiel,

– un thyristor 56 en série avec la bobine de commande de l'actionneur 18, la gâchette du thyristor 56 étant piloté par le détecteur de niveau 54.

On remarque que le circuit de déclenchement instantané est formé par un pont résistif $R_{11}$–$R_{12}$ connecté directement en parallèle à la sortie du bloc redresseur 22. Le point milieu 58 du pont résistif $R_{11}$–$R_{12}$ est relié à l'entrée directe du détecteur de niveau 54 par l'intermédiaire du compteur 28 en série avec une diode 60. Le compteur 28 peut être mis hors service par l'interrupteur 32 de shuntage.

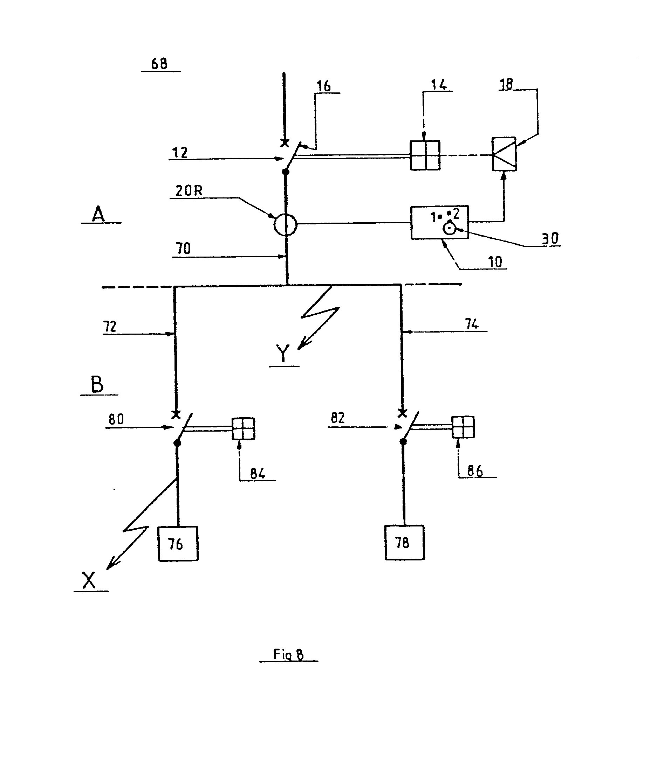

La fig. 8 montre le schéma monophasé d'une installation 68 de distribution à deux étages A, B, alimentée par une source ou réseau alternatif (non représenté) et équipée d'un système de sélectivité des protections sur courts-circuits. L'étage A amont, situé le plus près de la source, comporte une branche 70 principale dans laquelle est inséré le disjoncteur 12 limiteur équipé du déclencheur électronique 10 (fig. 7) sélectif à compteur 28 de cycles ouverture fermeture des contacts 16 sur défaut. L'étage B aval comprend à titre d'exemple deux branches 72, 74 élémentaires alimentant directement des charges 76, 78. Chaque branche 72, 74 élémentaire est dotée d'un disjoncteur 80, 82 de protection dont le mécanisme 84, 86 est commandé soit par un déclencheur non sélectif standard du type magnétothermique ou électronique, soit par le déclencheur électronique 10 de la fig. 7 dont le compteur 28 est réglé sur le cran 1. Dans ce dernier cas, le déclenchement intervient dès le début du premier cycle d'ouverture des contacts et empêche toute refermeture des contacts. Le déclenchement pourrait être instantané en position fermée de l'interrupteur 32. Le fonctionnement du système de sélectivité des protections sur courts-circuits de l'installation 68 de la fig. 8 est le suivant:

Le commutateur 30 du compteur 28 incorporé dans le déclencheur sélectif 10 du disjoncteur limiteur 12 de l'étage A amont est ajusté sur le cran 2. Le compteur 28 est celui de la fig. 3, la forme des signaux aux différents points A, B, C, D, E étant représentés sur les fig. 9 et 10.

Court-circuit aval

En cas de court-circuit X situé entre le disjoncteur 80 et la charge 76, le compteur 28 du déclencheur 10 du disjoncteur limiteur 12 de tête a enregistré un seul cycle ouverture fermeture de contacts 16, car le défaut a été éliminé par le disjoncteur 80 aval. Le fonctionnement du compteur 28 est illustré sur le chronogramme de la fig. 9, et on remarque que la tension $V_D$ aux bornes du condensateur 36 (fig. 3) reste inférieur au seuil de déclenchement. La sélectivité est réalisée grâce au non déclenchement du disjoncteur limiteur 12 de tête et la tension aux bornes du condensateur 36 revient à zéro au bout d'un temps prédéterminé. Il en résulte une remise à zéro automatique du compteur 28. Le disjoncteur 82 est resté fermé, et l'alimentation de la charge 78 est maintenue.

**Court-circuit amont**

En cas de court-circuit amont Y situé entre le disjoncteur 12 de tête et les disjoncteurs 80, 82, le disjoncteur limiteur 12 de l'étage A opère deux cycles d'ouverture fermeture des contacts 16. Il en résulte deux impulsions de courant de défaut enregistrées par le compteur 28. Le chronogramme de la fig. 10 montre deux impulsions de calibration (voir fig. 10.c) qui modifient la charge du condensateur 36. La tension $V_D$ aux bornes de ce dernier présente deux marches d'escalier (voir fig. 10.d), le seuil de déclenchement étant compris entre la première et la deuxième marche.

La sélectivité des protections sur courts-circuits de l'installation 68 permet ainsi de coordonner les disjoncteurs en série de manière à limiter le déclenchement au seul disjoncteur, situé immédiatement en amont du défaut. La sélectivité est totale avec tout type de disjoncteur situé à l'étage B aval.

**Revendications**

1. Déclencheur sélectif (10) associé à un disjoncteur (12) limiteur de protection d'un réseau ou installation à courant alternatif, le disjoncteur limiteur étant commandé par un actionneur (18) susceptible d'ouvrir définitivement les contacts (16) du disjoncteur après réception d'un ordre de déclenchement, et comprenant des moyens d'ouverture rapide et de refermeture des contacts (16), réagissant indépendamment de l'actionneur (18) lorsque la valeur du courant de défaut traversant le disjoncteur se trouve respectivement au-dessus ou en-dessous d'un seuil prédéterminé, le déclencheur sélectif (10) comportant un système électronique à propre courant ayant

— des capteurs (20 R, 20 S, 20 T) du courant traversant le disjoncteur (12),

— un compteur (28) des cycles successifs d'ouverture-fermeture des contacts (16) du disjoncteur, situé à l'intervention desdits moyens d'ouverture rapide et de refermeture,

— des moyens de réglage du compteur (28) pour régler le nombre de cycles, après comptage desquels un ordre de déclenchement est transmis à l'actionneur (18),

— et un dispositif effaceur pour la remise à zéro du compteur (28) lors d'une interruption dans la succession desdits cycles, caractérisé en ce que le système électronique du déclencheur sélectif (10) comporte de plus en premier circuit électronique de déclenchement temporisé (52), notamment à long retard (LR) et/ou à court retard (CR), et un deuxième circuit électronique de déclenchement rapide à temps d'intervention inférieur à celui du premier circuit, le compteur (28) étant inséré dans ledit deuxième circuit comprenant de plus:

— un déclencheur instantané (INST) ayant un seuil de déclenchement instantané supérieur au(x) seuil(s) de déclenchement du premier circuit électronique,

— et un organe de commutation (30, 32) susceptible d'occuper, soit une première position correspondant à la mise hors circuit du compteur (28) de telle sorte que l'actionneur (18) peut recevoir un ordre de déclenchement directement à partir du déclencheur instantané (INST), et soit une deuxième position correspondant à l'insertion du compteur (28) dans le deuxième circuit, de telle sorte que l'actionneur peut recevoir l'ordre de déclenchement a partir du compteur (28) après comptage du nombre réglé de cycles d'ouverture-fermeture.

2. Déclencheur sélectif selon la revendication 1, caractérisé en ce que l'organe de commutation est formé par un interrupteur (32) à deux positions stables, connecté électriquement en parallèle aux bornes du compteur (28), lequel est relié en série avec le déclencheur instantané (INST) dans le deuxième circuit électronique de déclenchement.

3. Déclencheur sélectif selon la revendication 1 ou 2, caractérisé en ce que le déclencheur instantané (INST) du deuxième circuit électronique de déclenchement comprend un diviseur résistif (R 11 – R 12) dont le point milieu (58) est connecté à l'entrée du compteur (28).

4. Déclencheur sélectif selon la revendication 1, caractérisé en ce que les moyens de réglage du compteur (28) et l'organe de commutation du compteur (28) sont agencés dans un commutateur (30) ayant une série de crans multiples 1, 2, 3... n de présélection du nombre de cycles, et un cran additionnel 0 de mise hors circuit du compteur (28) autorisant le déclenchement instantané.

5. Déclencheur sélectif selon l'une des revendications 1 à 4, comprenant un compteur (28) électronique analogique et un capteur de courant (20 R, 20 S, 20 T) formé par un transformateur d'intensité associé à chaque ligne du réseau, caractérisé en ce que le compteur (28) est pourvu d'un circuit détecteur (38) à temporisation servant à inhiber le fonctionnement du compteur (28) à partir de l'instant de détection de la première onde de défaut, la temporisation étant variable selon la forme du signal de mesure délivré par le transformateur d'intensité au circuit détecteur (38).

6. Déclencheur sélectif selon la revendication 5, caractérisé en ce qu'un circuit de mesure (48) en di/dt contrôle le temps de montée du premier front du signal de mesure délivré par le transformateur d'intensité et coopère avec le circuit détecteur (38) pour assurer une variation de la temporisation selon une fonction inverse avec le di/dt.

7. Déclencheur sélectif selon la revendication 5 ou 6 comprenant un capteur de courant constitué par un tore amagnétique du type Rogowski, caractérisé par le fait que le compteur (28) comporte un circuit détecteur (38) à seuil qui initialise le comptage des impulsions de courant de défaut après dépassement dudit seuil par le signal de mesure du capteur.

8. Déclencheur sélectif selon l'une des revendications 5 à 7, caractérisé par le fait que le circuit détecteur (38) est relié à un circuit de calibrage (40) destiné à fournir des impulsions calibrées en amplitude et en temps à un circuit intégrateur (42) effectuant la charge graduelle d'un condensateur (36), la tension aux bornes du condensateur (36) étant ensuite appliquée à l'une des entrées d'un comparateur (44), et que l'autre entrée du comparateur (44) sert à afficher le seuil de déclenchement au moyen du commutateur (30) de réglage.

9. Déclencheur sélectif selon l'une des revendications 1 à 4, caractérisé par le fait que le compteur est formé par un dispositif électronique de comptage numérique des ondes de courant de défaut correspondant aux cycles successifs.

**Patentansprüche**

1. Selektiv-Auslöser (10) mit einem strombegrenzenden Leistungsschalter (12) zum Schutz eines Wechselstromnetzes oder einer Wechselstromvorrichtung, wobei der strombegrenzende Leistungsschalter von einem Antrieb (18) gesteuert wird, der die Kontakte (16) des Leistungsschalters nach Empfangen eines Auslösebefehls endgültig öffnen kann, und der schnelle Mittel zum Öffnen und Wiederschliessen der Kontakte (16) aufweist, die unabhängig vom Antrieb (18) reagieren, wenn der Wert des den Leistungsschalter durchfliessenden Fehlerstrom über bzw. unter einer vorbestimmten Schwelle liegt, und wobei der Selektiv-Auslöser (10) ein elektronisches Eigenstromsystem besitzt mit:
— Fühlern (20R, 20S, 20T) des den Leistungsschalter (12) durchfliessenden Stromes,
— einem Zähler (28) der aufeinanderfolgenden Öffnungs- und Schliessfolgen der Kontakte (16) des Leistungsschalters, nach dem Einsatz der genannten schnellen Öffnungs- und Schliessmittel,
— Einstellmitteln des Zählers (28), um die Anzahl der Folgen einzustellen, nach deren Zählen ein Auslösebefehl an den Antrieb (18) übermittelt wird,
— und eine Löschvorrichtung für die Nulleinstellung des Zählers (28) bei einer Unterbrechung in dem Ablauf der genannten Folgen, dadurch gekennzeichnet, dass das elektronische System des Selektiv-Auslösers (10) ausserdem einen ersten elektronischen zeitverzögerten Auslösekreis (52) aufweist, insbesondere mit Langzeitverzögerung (LR) und/oder Kurzzeitverzögerung (CR), und einen zweiten schnellen elektronischen Auslösekreis aufweist und mit einer Einsatzgeschwindigkeit, welche niedriger als die des ersten Auslösekreises ist, wobei der Zähler (28) in dem genannten zweiten Auslösekreis eingeführt ist und ausserdem aufweist:
— einen unverzögerten Auslöser (INST) mit einer unverzögerten Auslöseschwelle, die höher als die Auslöseschwelle des ersten elektronischen Auslösekreises ist,
— und ein Schaltorgan (30, 32), welches entweder eine erste Stellung einnehmen kann, die einem Abschalten des Zählers (28) entspricht, so dass der Antrieb (18) direkt vom unverzögerten Auslöser (INST) ein Auslösesignal empfangen kann, oder eine zweite Stellung einnehmen kann, die dem Einfügen des Zählers (28) in den zweiten Auslösekreis entspricht, so dass der Antrieb den Auslösebefehl vom Zähler (28) empfangen kann, nach der eingestellten Anzahl von Öffnungs- und Schliessfolgen.

2. Selektiv-Auslöser gemäss Anspruch 1, dadurch gekennzeichnet, dass das Schaltorgan von einem Schalter (32) mit zwei festen Stellungen gebildet wird, der elektrisch parallel zu den Klemmen des Zählers (28) geschaltet ist, welcher mit dem unverzögerten Auslöser (INST) in dem zweiten elektronischen Auslösekreis in Serie geschaltet ist.

3. Selektiv-Auslöser gemäss Anspruch 1 oder 2, dadurch gekennzeichnet, dass der unverzögerte Auslöser (INST) des zweiten elektronischen Auslösekreises einen Widerstandsteiler (R11–R12) aufweist, dessen Mittelpunkt (58) mit dem Eingang des Zählers (28) verbunden ist.

4. Selektiv-Auslöser gemäss Anspruch 1, dadurch gekennzeichnet, dass die Einstellmittel des Zählers (28) und das Schaltorgan des Zählers in einem Schalter (30) angeordnet sind mit einer Reihe von mehreren Stellungskerben 1, 2, 3.... n, zur Vorwahl der Anzahl der Folgen, und eine zusätzliche Stellungskerbe 0 zum Abschalten des Zählers (28), was eine unverzögerte Auslösung ermöglicht.

5. Selektiv-Auslöser gemäss einem der Ansprüche 1–4, mit einem elektronischen Analog-Zähler (28) und einem Stromfühler (20R, 20S, 20T), der von einem mit jeder Netzleitung verbundenen Stromwandler gebildet wird, dadurch gekennzeichnet, dass der Zähler (28) mit einem zeitverzögerten Detektionskreis (38) versehen ist, der die Tätigkeit des Zählers (28) hemmt, von dem Augenblick an, wo die erste Fehlerwelle detektiert wird, wobei die Zeitverzögerung verschieden ist, gemäss der Form des Mess-Signals, das von dem Stromwandler an den Detektionskreis (38) abgegeben wird.

6. Selektiv-Auslöser gemäss Anspruch 5, dadurch gekennzeichnet, dass ein di/dt-Messkreis (48) die Zeit des Auftretens der ersten von dem Stromwandler abgegebenen Mess-Signal-Wellen steuert und mit dem Detektionskreis (28) zusammenarbeitet, um eine Änderung der Zeitverzögerung zu gewährleisten gemäss einer umgekehrten Funktion mit di/dt.

7. Selektiv-Auslöser gemäss Anspruch 5 oder 6, mit einem Stromfühler, der von einem unmagnetischen Ringkern (Typ Rogowski) gebildet wird, dadurch gekennzeichnet, dass der Zähler (28) einen Detektionskreis (38) mit Schwelle aufweist, der das Zählen der Fehlerstromimpulse «initialisiert» nach Überschreiten der genannten Schwelle durch das Mess-Signal des Fühlers.

8. Selektiv-Auslöser gemäss einem der Ansprüche 5–7, dadurch gekennzeichnet, dass der Detektionskreis (38) mit einem Kalibrierkreis (40) verbunden ist, der dazu bestimmt ist, kalibrierte Amplitude- und Zeitimpulse an einen Integrierkreis (42) zu liefern, der das stufenweise Laden eines Kondensators (36) ausführt, wobei die Spannung an den Klemmen des Kondensators (36) dann an einem der Eingänge eines Komparators (44) angelegt wird, und dass der andere Eingang des Komparators (44) dazu dient, die Auslöseschwelle mittels des Einstellschalters (30) anzuzeigen.

9. Selektiv-Auslöser gemäss einem der Ansprüche 1–4, dadurch gekennzeichnet, dass der Zähler von einer elektronischen Vorrichtung gebildet wird zum digitalen Zählen der Fehlerstromwellen, die den aufeinanderfolgenden Folgen entsprechen.

## Claims

1. A selective trip-unit (10), associated with a limiting circuit-breaker (12) protecting an alternating current system or installation, the limiting circuit-breaker being controlled by an actuator (18), able to open definitely the contacts (16) of the circuit-breaker, after a tripping order has been given, and comprising means of opening and closing contacts (16), reacting independently of the actuator (18), quickly when the fault-current value going through the circuit-breaker stands respectively over or under a predetermined threshold, the selective trip-unit (10) comprising an own current electronic system, having:
— captors (20R, 20S, 20T) of the current crossing the circuit-breaker (12),
— a counter (28) to count the successive opening and closing cycles of the contacts (16) of the circuit-breaker, following the intervention of said fast opening and closing means,
— a means of adjusting the counter (28) to settle the number of cycles, after counting these cycles, a tripping order being sent to the actuator (18),
— and a counter (28) clearing for zero resetting device when an interruption in the series of said cycles occurs, characterized in that the electronic system of the selective trip-unit comprises especially a first long time delay (52), and/or short time delay CR electronic tripping circuit, and a second fast tripping electronic circuit with an operating time ower than that of the first circuit, the counter (28) being inserted in the second circuit, comprising moreover:
— an instantaneous trip-unit (INST) having an instantaneous tripping threshold, higher than tripping thresholds of the first electronic circuit,
— and a switching unit (30, 32) having either a first position, corresponding to the disconnection of the counter (28), in such a way that the actuator (18) can receive a tripping order directly from the instantaneous trip-unit (INST), or a second position corresponding to the insertion of the counter (28) in a second circuit, in such a way that the actuator can receive the tripping order from the counter (28) after counting of the adjusted number of opening and closing cycles.

2. Selective trip-unit according to claim 1, characterized in that the switching unit is composed of a switch (32) with two stable positions, electrically connected in parallel to the terminals of the counter (28), said counter (28) being connected in series with the instantaneous trip-unit (INST), in the second tripping electronic circuit.

3. A selective trip-unit according to claim 1 or 2, characterized in that the instantaneous trip-unit (INST) of the second tripping electronic circuit comprises a resistive divider (R11, R12) where a mid-point (58) is connected to the counter input (28).

4. A selective trip-unit according to claim 1, characterized in that the counter setting device (28) and the switching unit of the counter (28) are fitted in a setting switch (30) having a series of multiple notch 1, 2, 3... n to preselect the number of cycles, and an additional notch 0 to put counter (28) out of operation, allowing an instantaneous tripping.

5. A selective trip-unit according to claims 1 to 4, comprising an analog solid state counter (28) and a current sensor (20R, 20S, 20T) made up of a current transformer, associated with each line of the system, characterized in that said counter (28) is fitted with a delayed action detector circuit (38) to inhibit the operation of the counter (28) from the moment the first fault wave is detected, the time delay being variable depending on the shape of the measurement signal, delivered to the detector circuit (38) by the current transformer.

6. A selective trip-unit according to claim 5, characterized in that a di/dt measurement circuit monitors the rise time of the first front of said measurement signal, and operates in conjunction with said detector circuit (38) to ensure a variation of the time delay according to an inverse function of the di/dt.

7. A selective trip-unit according to claim 5 or 6, comprising a current sensor made up of a Rogowski type non-magnetic toroid, characterized in that said counter (28) comprises a threshold detector circuit (38) which initializes fault current pulse counting after the measurement signal from the sensor has exceeded said threshold.

8. A selective trip-unit according to claim 5 to 7, characterized in that the detector circuit (38) is connected to a calibration circuit (40) designed to supply amplitude and time calibrated pulses to an integrator circuit (42) carrying out the gradual loading of a condensor (36), the voltage at the condensor (36) terminals then being applied to one of the inputs of a comparator (44) and the other comparator (44) input displaying the tripping threshold by means of setting switch (30).

9. A selective trip-unit according to one of claims 1 to 4, characterized in that the counter is formed by a solid state device that digitally counts the fault current waves corresponding to the successive cycles.

Fig 1

Fig 2

A — [ 38 ] — B — [ 40 ] — C — [ 42 ] — D

28

36

44

30

31

E

12

14

18

Fig 3

Icc

150KA eff.

35KA

Icc-1-

Icc-2-

0    3              10    t (ms)

Fig 4

Icc

50KA eff.

30 KA

Icc-3-

Icc-4-

0         6   10    t (ms)

Fig 5

A — [ 38 ] — B — [ 40 ] —

48

di/dt

Fig 6

11

Fig 7

14 · 18 · 56 · 54 · 60 · 30 · 28 · 32 · 58 · 52 · 10

+Vcc · -Vcc · R11 · R12 · 50 · +Vcc · Vref · AL · RM

Test · -Vcc

22 · Vc1 · Vc2 · Vc3 · Vc4

20R · 20S · 20T · 20N

Fig 8

Fig 9

Fig 10